(19) Europäisches Patentamt
European Patent Office
Office européen des brevets

(11) Veröffentlichungsnummer: **0 416 407 A1**

(12) # EUROPÄISCHE PATENTANMELDUNG

(21) Anmeldenummer: **90116316.2**

(22) Anmeldetag: **25.08.90**

(51) Int. Cl.[5]: **C08L 69/00**, C08L 67/02, C08K 3/30

(30) Priorität: **07.09.89 DE 3929672**

(43) Veröffentlichungstag der Anmeldung: **13.03.91 Patentblatt 91/11**

(84) Benannte Vertragsstaaten: **DE FR GB IT NL**

(71) Anmelder: **BAYER AG**
**W-5090 Leverkusen 1 Bayerwerk(DE)**

(72) Erfinder: **Grigo, Ulrich, Dr.**
**Michelsheide 9**
**W-4152 Kempen 3(DE)**
Erfinder: **Kirsch, Jürgen, Dr.**
**Hahnenweg 1**
**W-5000 Köln 80(DE)**
Erfinder: **Wittmann, Dieter, Dr.**
**Wolfskaul 4**
**W-5000 Köln 80(DE)**
Erfinder: **Idel, Karsten, Dr.**
**Am Schwarzkamp 38**
**W-4150 Krefeld(DE)**
Erfinder: **Horlacher, Peter, Dr.**
**Ginsterweg 4**
**W-7913 Senden(DE)**

(54) **Thermoplastische Formmassen aus Polycarbonat, Polyalkylenterephthalat, speziellem Bariumsulfat und gegebenenfalls Elastomeren.**

(57) Thermoplastische Formmassen aus Polycarbonat, Polyalkylenterephthalat, speziellem Bariumsulfat und gegebenenfalls Elastomeren zeichnen sich gegenüber bekannten Formmassen aus Polycarbonat, Polyalkylenterephthalat und Elastomeren durch eine verbesserte Wärmeformbeständigkeit und Zähigkeit aus.

EP 0 416 407 A1

# THERMOPLASTISCHE FORMMASSEN AUS POLYCARBONAT, POLYALKYLENTEREPHTHALAT, SPEZIELLEM BARIUMSULFAT UND GEGEBENENFALLS ELASTOMEREN

Die Erfindung betrifft thermoplastische Formmassen aus Polycarbonat, Polyalkylenterephthalat, speziellem Bariumsulfat und gegebenenfalls Elastomeren sowie die Verwendung der thermoplastischen Formmassen zur Herstellung von Formkörpern, Halbzeugen und Folien.

Thermoplastische Formmassen aus Polycarbonat, Polyalkylenterephthalat und Elastomeren sind bekannt (siehe z.B. US 3 864 428, EP-A-25 920, 64 648, 110 222, 304 787 und die japanische Patentanmeldung 59/166 556). Die bekannten Formmassen lassen sich zu hochschlagzähen Formkörpern verarbeiten. Die Formmassen der genannten Zusammensetzung weisen viele positive Eigenschaften auf. Sie werden jedoch manchen technischen Anforderungen nicht gerecht. Wünschenswert ist insbesondere ein Verbesserung der Tieftemperaturzähigkeit und der Wärmeformbeständigkeit.

Es wurde nun gefunden, daß thermoplastische Formmassen aus Polycarbonat, Polyalkylenterephthalat, Bariumsulfat mit definierter Korngröße und/oder aktivierter Oberfläche und gegebenenfalls einem Elastomeren sich durch hohe Wärmeformbeständigkeit und gute Zähigkeit auszeichnen.

Gegenstand der vorliegenden Erfindung sind daher thermoplastische Formmassen aus

A) 1 bis 99 Gew.-Teilen Polycarbonat,

B) 1 bis 99 Gew.-Teilen Polyalkylenterephthalat,

C1) 0,1 bis 50 Gew.-Teilen Bariumsulfat mit chemoreaktiver Oberfläche, hergestellt durch Fällung von Bariumionen mittels Sulfationen in wäßrigem Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 $\mu$m [80 bis 5 $m^2/g$ (nach BET)] aufweist,

und/oder

C2) 0,1 bis 50 Gew.-Teilen ultrafeinem Bariumsulfat, hergestellt durch Zusammenbringen getrennter wäßriger Lösungen, die jeweils äquivalente Mengen Bariumionen und Sulfationen enthalten, und Abtrennen des Präzipitats, wobei man zur Herstellung von gefäll tem Bariumsulfat mit einer Primärkorngröße von <0,1 $\mu$m in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 $\mu$l vereinigt und die gebildete Suspension des Präzipitats kontinuierlich aus dem Reaktor abführt,

und gegebenenfalls

D) 0,1 bis 30 Gew.-Teilen eines Elastomeren mit der Maßgabe, daß sich die Komponenten A) bis C) bzw. D) zu 100 Gew.-Teilen addieren.

Bevorzugt sind thermoplastische Formmassen, die die Komponente A) zu 20 bis 80 Gew.-Teilen, die Komponente B) zu 80 bis 10 Gew.-Teilen, die Komponenten C1) und/oder C2) zu 0,1 bis 40 Gew.-Teilen und gegebenenfalls die Komponente D) zu 1 bis 30 Gew.-Teilen enthalten.

Ganz besonders bevorzugt sind thermoplastische Formmassen, die die Komponente A) zu 40 bis 70 Gew.-Teilen, die Komponente B) zu 20 bis 60 Gew.-Teilen, die Komponenten C1) und/oder C2) zu 0,1 bis 5 Gew.-Teilen und gegebenenfalls die Komponente D) zu 5 bis 25 Gew.-Teilen enthalten.

Als Komponente A) können Polycarbonate in Form von Homopolycarbonaten, Copolycarbonaten sowie Mischungen dieser Polycarbonate eingesetzt werden. Diphenole, die für den Aufbau der Polycarbonate dienen sind beispielsweise:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
$\alpha,\omega$-Bis-(hydroxyphenyl)-diisopropylbenzole

sowie deren kernalkylierten und kernhalogenierten Verbindungen. Diese und weitere geeignete aromatische Dihydroxyverbindungen sind z.B. in den US-Patentschriften 3 028 365 und 2 999 846 und in den deutschen Offenlegungsschriften 2 063 050 und 2 211 957 und in der Monographie von H. Schnell "Chemistry and Physics of Polycarbonates", Interscience Publishers, New York, 1964, beschrieben.

Bevorzugt einzusetzende Diphenole sind solche der nachstehenden Formel:

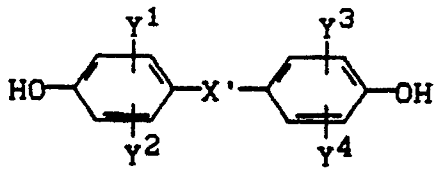 ,

worin
X' eine Einfachbindung, $-CH_2-$, $-C(CH_3)_2-$, O, S, $SO_2$,

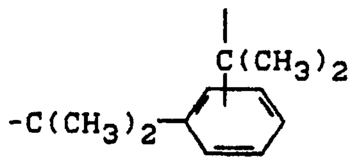 , 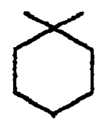 oder 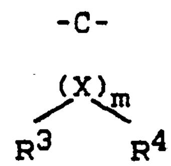

bedeutet und
$Y^1$ bis $Y^4$ gleich oder verschieden sind und Wasserstoff, $C_1$-$C_4$-Alkyl, vorzugsweise Methyl, oder Halogen, vorzugsweise Chlor oder Brom, bedeuten,
m eine ganze Zahl von 4 bis 7, bevorzugt 4 oder 5 ist,
$R^3$ und $R^4$ für jedes X individuell wählbar sind und unabhängig voneinander Wasserstoff oder $C_1$-$C_{12}$-Alkyl, bevorzugt Methyl, bedeuten,
und
X für Kohlenstoff steht, mit der Maßgabe, daß mindestens ein Ring-C-Atom gleichzeitig durch $C_1$-$C_{12}$-Alkylreste substituiert ist.

Bevorzugt sind 1 bis 2 Ring-C-Atome, insbesondere nur ein Ring-C-Atom, gleichzeitig durch Alkylreste substituiert. Die Ring-C-Atome in $\alpha$-Stellung zu dem diphenylsubstituierten C-Atom (C-1) sind bevorzugt nicht mit Alkyl substituiert, dagegen ist die Alkyl-Disubstitution in $\beta$-Stellung zu C-1 bevorzugt.

Die Polycarbonate A) umfassen auch Blockcopolycarbonate, die 1 bis 25, vorzugsweise 1,5 bis 15, insbesondere 2 bis 10 Gew.-%, bezogen auf Diphenolreste des Copolycarbonats A), einkondensierte Reste von Diphenolen der Formel

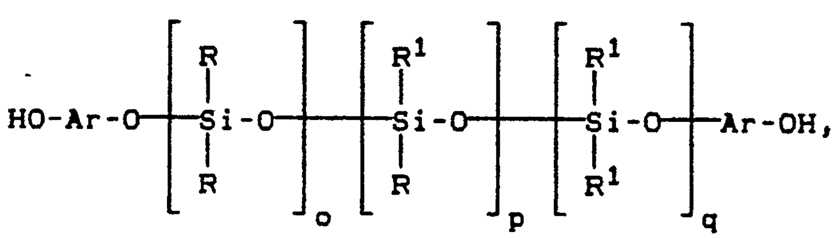

worin
Ar für gleiche oder verschiedene Arylenreste steht,
R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl bedeuten und
o = 0 bis 200
p = 0 bis 200
q = 0 bis 200,
mit der Maßgabe, daß o + p + q, d.h. die Anzahl der Diorganosiloxy-Einheiten, 5 bis 200, vorzugsweise 20 bis 160 ist.

Als Alkylreste kommen solche mit 1 bis 20 C-Atomen, als Alkenylreste solche mit 2 bis 6 C-Atomen und als Arylreste solche mit 6 bis 14 C-Atomen in Frage. Diese Reste können durch Chlor, Brom oder Fluor substituiert sein. Als Beispiele für solche Reste seien genannt: Methyl, Ethyl, Propyl, n-Butyl, tert.-Butyl, Vinyl, Phenyl, Naphthyl, Chlormethyl, Trifluorpropyl, Perfluorbutyl, Perfluoroctyl und Chlorphenyl.

Als Reste R und $R^1$ sind bevorzugt die niederen Alkylreste, wie Methyl, Ethyl, Propyl, besonders bevorzugt ist Methyl.

Die eingesetzten Diphenole können sowohl allein als auch als Mischung eingesetzt werden.

Die Polycarbonate A) besitzen in der Regel mittlere Molekulargewichte $M_w$ von 10 000 bis 200 000, vorzugsweise von 20 000 bis 80 000, ermittelt durch Lichtstreuung.

Polycarbonate der vorgenannten Art sind beispielsweise beschrieben in US-PS 3 821 325, 3 189 662, 3 419 634; DE-OS 2 411 123, 2 411 363, 3 334 782, 3 506 472.

Die Polycarbonate können nach bekannten Methoden, beispielsweise nach dem Zweiphasengrenzflächenverfahren, hergestellt werden (vgl. z.B. H. Schnell "Chemistry and Physics of Polycarbonates", Interscience Publishers, New York, 1964).

Die als Komponente B) einzusetzenden Polyalkylenterephthalate lassen sich aus Terephthalsäure (oder ihren reaktionsfähigen Derivaten) und aliphatischen Diolen mit 2 bis 10 Kohlenstoffatomen nach bekannten Methoden herstellen (Kunststoff-Handbuch, Band VIII, Seite 695 ff, Carl-Hanser-Verlag, München 1983).

Bevorzugte Polyalkylenterephthalate enthalten mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate können neben Terephthalsäureresten bis zu 20 Mol-% Reste anderer aromatischer oder cycloaliphatischer Dicarbonsäuren mit 8 bis 14 C-Atomen und/oder aliphatischer Dicarbonsäuren mit 4 bis 12 C-Atomen enthalten, wie Reste von Phthalsäure, Isophthalsäure, Naphthalin-2,6-dicarbonsäure, 4,4-Diphenyldicarbonsäure, Bernstein-, Adipin-, Sebacinsäure, Cyclohexandiessigsäure.

Die bevorzugten Polyalkylenterephthalate können neben Ethylenglykol- oder Butandiol-1,4-Resten bis zu 20 Mol-% anderer aliphatischer Diole mit 3 bis 21 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl) propan und 2,2-Bis-(4-hydroxypropoxy-phenyl)-propan (s. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 19 00 270 und US-PS 36 92 744 beschrieben sind, verzweigt werden Beispiele bevorzugter Varzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern) und Ethylenglykol hergestellt worden sind.

Die vorzugsweise verwendeten Polyethylenterephthalate besitzen im allgemeinen eine Intrinsic-Viskosität von 0,4 bis 1,5 dl/g, vorzugsweise 0,5 bis 0,9 dl/g, die verwendeten Polybutylenterephthalate besitzen im allgemeinen eine Intrinsic-Viskosität von 0,7 bis 1,6 dl/g, vorzugsweise 0,8 bis 1,3 dl/g, insbesondere 0,8 bis 1,05 dl/g, jeweils gemessen in Phenol/o-Dichlorbenzol (1:1 Gew.-Teile) bei 25 °C.

Als Komponente C1) der erfindungsgemäßen thermoplastischen Formmassen kann eingesetzt werden Bariumsulfat mit chemoreaktiver Oberfläche hergestellt durch Fällung von Bariumionen mittels Sulfationen in wäßrigem Medium in Gegenwart von zusätzlichen mit Bariumionen fällbaren und schwer lösliche Bariumverbindungen bildenden Anionen wasserlöslicher Verbindungen, wobei das erhaltene chemoreaktive Bariumsulfat Korngrößen von <0,1 µm, bevorzugt 0,09 bis 0,01 µm [80 bis 5 $m^2/g$, bevorzugt 50 bis 10 $m^2/g$, (nach BET)] aufweist (s. DE-OS 3 718 277 und deutsche Patentanmeldung P 3 810 423.7).

Das beim Ausfällen von Bariumsulfat in Gegenwart von Anionen, die mit Bariumionen schwer lösliche Verbindungen bilden, entsprechender Konzentrationen erhaltene Produkt, enthält die Fremdionen entweder homogen über den Kristall verteilt oder diese an der Oberfläche angereichert.

Je nach Ladungsdichte und Molekülgröße der Anionen- bzw. Dotierungskomponenten werden Fehlstellen im $BaSO_4$-Kristallgitter besetzt bzw. Gitterplätze in statistischer Verteilung eingenommen oder es erfolgt mit langen apolaren Molekülresten eine Abschirmung der Oberflächenladung (Hydrophobierung).

Gemäß dem Verfahren können Anionen wasserlöslicher organischer oder anorganischer Verbindungen eingesetzt werden. In manchen Fällen kann es auch zweckmäßig sein, Gemische dieser Verbindungen zu verwenden.

Zur Durchführung des Verfahrens werden diese zusätzlichen Komponenten zweckmäßig der wäßrigen Lösung zugesetzt, welche die anorganische Sulfatkomponente, wie Alkalisulfat, enthält. Die zusätzliche Komponente wird in einer Menge von 0,1 bis 50 Gew.-%, bezogen auf das zu fällende Bariumsulfat, verwendet. Vorzugsweise wird die zusätzliche Komponente in einer Menge von 1 bis 10 Gew.-% eingesetzt.

Geeignete organische wasserlösliche Verbindungen für das Verfahren sind Verbindungen aus der Gruppe Alkyl- und Arylsulfonate, Alkyl- und Arylsulfate oder Alkyl- und Arylphosphorsäureester, wobei der Alkyl- oder Arylrest gegebenenfalls durch funktionelle Gruppen teilweise substituiert sein kann, oder perfluorierte Alkyl- und Arylsulfonate. Beispielsweise werden in dem Verfahren der Erfindung eingesetzt:
Natriumdodecylbenzolsulfonat
Natriumlaurylsulfat
Natriumcetylsulfat
Phosphorsäuremonoethylmonobenzylester
Lithiumperfluoroctansulfonat.

Als Verbindungen, die mit funktionellen Gruppen substituierte Alkyl- oder Arylreste tragen, eignen sich solche mit Nalogen, Hydroxyl-, Amino-, Imino-, Mercapto-, Carboxyl- oder Alkoxycarbonyl-Gruppen oder einer endständigen Doppelbindung, beispielsweise
12-Brom-1-dodecansulfonsäure
Natrium-10-hydroxy-1-decansulfonat
Natrium-Carrageenan
Natrium-10-Mercapto-1-Cetansulfonat
Natrium-16-Ceten(1)sulfat.

In dem Verfahren zur Herstellung von chemoreaktivem Bariumsulfat werden als Anionen wasserlöslicher anorganischer Verbindungen (andere anorganische Verbindungen als Sulfate) anorganische Verbindungen aus der Gruppe Thiosulfat, Silikat, Fluorid, Fluorsilikat, Monofluor phosphat oder Wolframat eingesetzt. Geeignete Verbindungen sind beispielsweise
Natriumthiosulfat ($Na_2S_2O_3 \cdot 5\ H_2O$)
Natriummetasilikat ($Na_2SiO_3$)
Natriumfluorid (NaF)
Lithiumhexafluorosilikat ($Li_2(SiF_6) \cdot 2\ H_2O$)
Natriumfluorophosphat ($Na_2PO_3F$)
Natriumpolywolframat ($3\ Na_2WO_4 \cdot 9\ WO_3 \cdot H_2O$).

Die nach dem Verfahren hergestellten chemoreaktiven Bariumsulfat-Pigmente können eine für den vorgesehenen Verwendungszweck geeignete Nachbehandlung erfahren.

Sind der Bariumsulfatoberfläche z.B. durch die Dotierungskomponenten saure bzw. veresterbare Hydroxylgruppen, wie

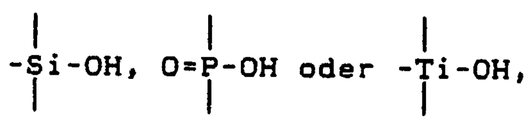
, oder ,

aufgeprägt oder befinden sich in der Kristallitoberfläche neben den $(SO_4)^{2-}$-Anionen durch Copräzipitation eingebrachte, andere chemisch umsetzbare Gruppen, wie $S^{2-}$, $SH^-$ oder $F^-$, so kann dieses $BaSO_4$-Pigment mit geeigneten Nachbehandlungskomponenten bzw. Kupplungsmitteln für das jeweilige Einsatzgebiet ausgerüstet werden. Ein im allgemeinen eingesetzter Haftvermittler bzw. Kupplungsmittel sind organofunktionelle Alkoxysilane, wie Vinyltrimethoxysilan. Es werden aber auch Alkoxytitanate, -zirkonate oder -aluminate eingesetzt. Das Aufbringen des Haftvermittlers erfolgt auf an sich bekannte Weise. Er kann in einem Lösungsmittel gelöst auf das Pigment aufgebracht werden, wobei das Lösungsmittel abgezogen und der Feststoff getrocknet wird. Oder die Belegung erfolgt bei flüssigen Haftvermittlern durch Verdüsen des Mittels auf das im Mischbett bewegte Pigmentpulver.

Das als Komponente C2) der thermoplastischen Formmasse zuzusetzende ultrafeine Bariumsulfat wird hergestellt durch Zusammenbringen getrennter wäßriger Lösungen, die jeweils äquivalente Mengen Bariumion bzw. Sulfation enthalten, und Abtrennen des Präzipitats, wobei man zur Herstellung von gefälltem Bariumsulfat mit einer Primärkorngröße von <1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 µl vereinigt und die gebildete Suspension des Präzipitats kontinuierlich aus dem Reaktor abführt. In der wäßrigen Lösung des Sulfations kann auch ein weiteres

Anion wasserlöslicher anorganischer oder organischer Verbindung enthalten sein, das schwerlösliche Bariumverbindungen bildet (vergl. DE-OS 3 703 377 und deutsche Patentanmeldung P 3 810 423.7).

Nach dem Verfahren werden somit kleine Teilvolumina der Reaktionslösungen in hoher Anzahl, beispielsweise mehr als $10^6$ pro sec, zusammengebracht und in einem Reaktionsvolumen einer mittleren Volumengröße von <1 μl die Fällung rasch und vollständig herbeigeführt.

Zur Durchführung des Verfahrens werden die jeweiligen wäßrigen Lösungen der Reaktanden kontinuierlich jeweils in Tropfenform einer mittleren Tropfengröße von <0,5 μl rasch zusammengebracht und in einem Fällvolumen einer mittleren Volumengröße von <1 μl vereinigt.

Nach einer weiteren Ausgestaltung der Verfahrens überführt man die wäßrige Lösung des einen Reaktanden kontinuierlich in eine Tropfenform einer mittleren Tropfengröße von <0,5 μl und bringt diese Tropfen kontinuierlich in einen fließenden Film der wäßrigen Lösung des anderen Reaktanden ein.

Das heißt mit anderen Worten, es werden Tröpfchen der wäßrigen Lösung des einen Reaktanden mit Tröpfchen des anderen Reaktanden mit hoher Geschwindigkeit zusammengebracht, oder es werden die Tröpfchen der wäßrigen Lösung des einen Reaktanden in den fließenden Film der wäßrigen Lösung des anderen Reaktanden mit hoher Geschwindigkeit eingeschleudert, beispielsweise die Tröpfchen einer wäßrigen Bariumchloridlösung in den Rieselfilm einer wäßrigen Natriumsulfatlösung.

Das Verfahren wird zweckmäßig in einem vertikalen, zylinderförmigen geschlossenen Reaktor durchgeführt. Der Reaktor weist hierbei in seinem Kopfteil an sich bekannte Mittel bzw. Vorrichtungen zur Zerteilung von wäßrigen Komponentenlösungen in feinste Tröpfchen auf, wie auch Mittel zur Erzeugung eines Rieselfilms aus wäßrigen Komponentenlösungen. In seinem Bodenteil ist ein derartiger Reaktor zweckmäßig konisch gestaltet und mit Abzugseinrichtungen für das Reaktionsgemisch bzw. für die Fällungssuspension versehen.

Die Tropfenform der Reaktionslösung kann im Kopfteil des zylindrischen Reaktors durch Zerstäubung der Lösung unter Druck, beispielsweise Düsen, oder durch Einwirkung von Zentrifugalkraft auf die Lösung erzeugt werden, beispielsweise Zerstäuberscheiben. Die Tröpfchen haben eine Größe von <0,5, vorzugsweise von 0,001 bis 0,25 μl. Der Rieselfilm an der Innenwand des Reaktors wird in einer Dicke von 1 bis 10 mm erzeugt.

Die Tröpfchenströme der wäßrigen Lösungen können dismetral oder in einem Winkel gegeneinander gerichtet werden. Die Tröpfchenströme können des weiteren aber auch parallel in gleicher Richtung im Reaktor geführt und zur gegenseitigen Durchdringung und Fällung gebracht werden.

Der an der Reaktorwandung ablaufende Film der Fällungssuspension wird im unteren Teil des Reaktors gesammelt und über eine Dosiervorrichtung aus dem Reaktor ausgetragen und auf den Feststoff, wie ultrafeines Bariumsulfat einer Primärkorngröße unter 0,1 μ, bevorzugt 0,09 bis 0,01 μ [Oberfläche (BET): 80 bis 5 $m^2/g$, bevorzugt 40 bis 10 $m^2/g$] aufgearbeitet.

Das Bariumsulfat mit chemoreaktiver Oberfläche und/oder das ultrafeine Bariumsulfat kann den anderen Komponenten der Formmasse in üblicher Weise zugemischt werden. Bevorzugt ist jedoch der Zusatz des Bariumsulfats zur Komponente B). Man kann beispielsweise das Bariumsulfat dem Polyethylenterephthalat in Form einer Aufschlämmung im entsprechenden Diol von Beginn der Polyesterbildung an zusetzen. Es ist aber auch möglich das Bariumsulfat in Form eines hochkonzentrierten Compounds zu der Schmelzcompoundierung zuzugeben.

Die Elastomere D) umfassen Copolymerisate - insbesondere Pfropfcopolymerisate - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat, (Meth-)Acrylsäureester mit 1 bis 18 C-Atomen in der Alkoholkomponente und Kohlenmonoxid, also Polymerisate, wie sie z.B. in "Methoden der Organischen Chemie", (Houben-Weyl), Bd. 14/1, Georg Thieme-Verlag, Stuttgart 1961, S. 393-406, und in C.B. Bucknall, "Toughened Plastics", Appl. Science Publishers, London 1977, beschrieben sind. Bevorzugte Elastomere gemäß Komponente D) besitzen einen Gelgehalt von über 20, vorzugsweise über 40 Gew.-%, insbesondere über 60 Gew.-%.

Bevorzugte Elastomere D) sind Ethylen/Vinylacetat-Copolymerisate mit 15 bis 70 Gew.-% Vinylacetat und Schmelzindices von nicht fließfähig bis 1000, vorzugsweise von 0,1 bis 20, gemessen bei 190 °C und 2,16 kp Belastung nach DIN 53 755. Weiterhin bevorzugt sind Terpolymerisate aus Ethylen, Acrylsäurealkylester bzw. Vinylacetat und Kohlenmonoxid.

Bevorzugte Elastomere D) sind außerdem die sogenannten EPM- bzw. EPDM-Kautschuke, in denen das Gewichtsverhältnis von Ethylen- zu Propylenresten im Bereich von 40:60 bis 90:10, vorzugsweise 40:60 bis 65:35, liegt. Besonders bevorzugte sind EP(D)M-Kautschuke mit aufgepfropften reaktiven Gruppen (z.B. MSA).

Die Mooney-Viskositäten ($ML_{1+4}$/100 °C gemäß DIN 53 523) der unvernetzten EPM- bzw. EPDM-Kautschuke liegen zwischen 25 und 100, vorzugsweise zwischen 35 und 95. Die Gelgehalte der unvernetzten EPM- bzw. EPDM-Kautschuke liegen unter 1 Gew.-%.

Die eingesetzten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-Monomere in EPDM seien beispielsweise genannt: konjugierte Diene, z.B. Isopren und Butadien, nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien, cyclische Diene, z.B. Cyclopentadien, Cyclohexadien, Cyclooctadien und Dicyclopentadien, Alkenylnorbornene, z.B. 5-Ethyliden-2-norbornen, 5-Butyliden-2-norbornen, 2-Methallyl-5-norbornen, 2-Isopropenyl-5-norbornen, und Tricyclodiene, z.B. 3-Methyltricyclo-(5,2,1,0,2,6)3,8-dicadien. Bevorzugt seien die nichtkonjugierten Diene Hexadien-1,5, Ethylidenorbornen und Dicyclopentadien angeführt. Der Diengehalt im EPDM beträgt vorzugsweise 0,5 bis 10 Gew.-% Derartige EPM-bzw. EPDM-Kautschuke sind z.B. in der DE-OS 2 808 709 beschrieben.

Bevorzugte Elastomere D) sind auch gegebenenfalls selektiv hydrierte Bockcopolymerisate eines vinylaromatischen Monomeren (X) und eines konjugierten Diens (Y) vom X-Y-Typ. Diese Blockcopolymerisate können nach bekannten Verfahren hergestellt werden. Im allgemeinen kann für die Herstellung der geeigneten X-Y-Blockcopolymerisate aus z.B. Styrol, α-Methylstyrol, und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508 ff beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbndungen im wesentlichen unbeeinflußt bleiben.

Bevorzugte Elastomere D) sind darüber hinaus z.B. mit Styrol und/oder Acrylnitril und/oder (Meth)-Acrylsäureestern gepfropfte Polybutadiene, Butadien/Styrol-Copolymerisate und Acrylatkautschuke; d.h. Copolymerisate der in der DE-OS 1 694 173 beschriebenen Art; mit Acryl-oder Methacrylsäureestern, Vinylacetat, Acrylnitril, Styrol und/oder Alkylstyrolen gepfropfte Polybutadiene, Butadien/Styrol- oder Butadien/Acrylnitrilcopolymerisate, Polyisobutene oder Polyisoprene, wie sie z.B. in der DE-OS 2 348 377 beschrieben sind.

Besonders bevorzugte Elastomere D) sind Pfropfpolymerisate, die durch Pfropfreaktion von

I. 10 bis 40, vorzugsweise 10 bis 35, insbesondere 15 bis 25 Gew.-%, bezogen auf Pfropfprodukt, mindestens eines (Meth-)Acrylsäureesters und/oder eines Gemisches aus 10 bis 35, vorzugsweise 20 bis 35 Gew.-%, bezogen auf Gemisch, Acrylnitril und 65 bis 90, vorzugsweise 65 bis 80 Gew.-%, bezogen auf Gemisch, Styrol auf

II. 60 bis 90, vorzugsweise 65 bis 90, insbesondere 75 bis 85 Gew.-%, bezogen auf Pfropfprodukt, eines Butadien-Polymerisats mit mindestens 70 Gew.-%, bezogen auf II, Butadienresten als Pfropfgrundlage erhältlich sind, wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats 0,2 bis 0,6, vorzugsweise 0,3 bis 0,5 µm betragen.

(Meth-)Acrylsäureester I sind Ester der Acrylsäure bzw. Methacrylsäure und einwertiger Alkohole mit 1 bis 8 C-Atomen, z.B. Methacrylsäuremethylester, -ethylester und -propylester.

Die Pfropfgrundlage II kann neben Butadienresten bis zu 30 Gew.-%, bezogen auf II, Reste anderer, ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I üblicherweise nicht vollständig auf die Pfropfgrundlage II aufpfropfen, werden erfindungsgemäß unter Pfropfpolymerisaten auch solche Produkt verstanden, die neben den eigentlichen Pfropfpolymerisaten auch Homo- und Copolymerisate der eingesetzten Pfropfmonomeren I enthalten.

Die mittlere Teilchangröße $d_{50}$ ist der Durchmesser, oberhalb und unterhalb dessen jeweils 50 Gew.-% der Teilchen liegen. Er kann bestimmt werden mittels Ultrazentrifugenmessungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14 , (1970), 111-129) oder mittels Lichtstreuungsmessungen.

Der Pfropfgrad G bezeichnet das Gewichtsverhältnis von aufgepfropften Pfropfmonomeren zur Pfropfgrundlage und ist dimensionslos.

Solche Pfropfpolymeriste sind z.B. beschrieben in DE 3 324 398.

Besonders bevorzugte Elastomere D) sind auch Pfropfpolymerisate aus

a) 25 bis 98 Gew.-%, bezogen auf Komponente D), Acrylatkautschuk mit einer Glasübergangstemperatur unter -20 °C als Pfropfgrundlage und

b) 2 bis 75 Gew.-%, bezogen auf Komponente D), mindestens eines polymerisierbaren, ethylenisch ungesät tigten Monomeren, dessen bzw. deren in Abwesenheit von a) entstandenen Homo- bzw. Copolymerisate eine Glasübergangstemperatur über 25 °C hätten, als Pfropfmonomere.

Die Acrylatkautschuke a) der o.g. Polymerisate D) sind vorzugsweise Polymerisate aus Acrylsäurealkylestern, gegebenenfalls mit bis zu 40 Gew.-%, bezogen auf a), anderer polymerisierbarer, ethylenisch ungesättigter Monomerer. Sofern die als Pfropfgrundlage a) eingesetzten Acrylatkautschuke - wie unten beschrieben - ihrerseits bereits Pfropfprodukte mit einem Dienkautschukkern sind, wird zur Berechnung dieser Prozentangaben der Dienkautschukkern nicht mitgezählt. Zu den bevorzugten polymeri sierbaren Acrylsäureestern gehören $C_1$-$C_8$-Alkylester, beispielsweise Methyl-, Ethyl-, Butyl-, Octyl-und 2-Ethyl-hexylester, Halogenalkylester, vorzugsweise Halogen-$C_1$-$C_8$-alkylester, wie Chlorethylacrylat, und aromatische Ester, wie Benzylacrylat und Phenethylacrylat. Sie können einzeln oder in Mischung eingesetzt werden.

Die Acrylatkautschuke a) können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit drei bis acht C-Atomen und ungesättigter einwertiger Alkohole mit 3 bis 12 C-Atomen oder gesättigter Polyole mit 2 bis 4 OH- Gruppen und 2 bis 20 C-Atomen, wie Ethylenglykoldimethylacrylat, Allylmethacrylat; mehrfach ungesättigte heterocyclische Verbindungen, wie Trivinyl- und Triallylcyanurat und -isocyanurat, Tri-acryloyl-s-triazine, insbesondere Triallylcyanurat; polyfunktionelle Vinylverbindungen, wie Di- und Trivinylbenzol, aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin und Triallylbenzole.

Die Menge der vernetzenden Monomeren beträgt vorzugsweise 0,02 bis 5, insbesondere 0,05 bis 2 Gew.-%, bezogen auf Pfropfgrundlage a).

Bei cyclischen vernetzenden Monomeren mit mindestens 3 ethylenisch ungesättigten Gruppen ist es vorteilhaft, die Menge auf 1 Gew.-% der Pfropfgrundlage a) zu beschränken.

Bevorzugte "andere" polymerisierbare, ethylenisch ungesättigte Monomere, die neben den Acrylsäureestern gegebenenfalls zur Herstellung der Pfropfgrundlage a) dienen können, sind z.B. Acrylnitril, Styrol, α-Methylstyrol, Acrylamide, Vinyl-$C_1$-$C_6$-alkylether, Butadien, Isopren. Bevorzugte Acrylatkautschuke als Pfropfgrundlage a) sind Emulsionspolymerisate, die einen Gelgehalt von 60 Gew.-% aufweisen.

Der Gelgehalt der Pfropfgrundlage a) wird bei 25 °C in Dimethylformamid bestimmt (M. Hoffmann, H. Krömer, R. Kuhn, Polymeranalytik I und II, Georg-Thieme-Verlag Stuttgart 1977).

Acrylatkautschuke als Pfropfgrundlage a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage a) kann 0,1 bis 80, bevorzugt 10 bis 50 Gew.-%, bezogen auf a), betragen. Schale und Kern können unabhängig voneinander unvernetzt, teilvernetzt oder hochvernetzt sein.

Besonders bevorzugte Pfropfgrundlagen a) für Pfropfpolymerisate D) auf Basis von Polyacrylsäureestern seien nachfolgend zusammengefaßt:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d.h. der Quotient aus der Menge des aufgepfropften Monomeren b) und der Menge des eingesetzten Pfropfmonomeren b), beträgt in der Regel 20 bis 80 Gew.-%. Die Bestimmung kann wie bei M. Hoffmann, H. Krömer, R. Kuhn, Polymeranalytik, Bd. 1, Georg-Thieme-Verlag, Stuttgart 1977, beschrieben, erfolgen.

Bevorzugte Pfropfmonomere b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90:10 bis 50:50.

Solche Pfropfpolymerisate D) auf Basis von Polyacrylsäureestern werden z.B. in der DE-AS 2 444 584 (= US-PS 4 022 748) und in der DE-OS 2 726 256 (= US-PS 4 096 202) beschrieben.

Besonders vorteilhafte Pfropfpolymerisate dieser Art erhält man, wenn man 2 bis 20, vorzugsweise 2 bis 15 Gew.-%, bezogen auf D), Monomer b) auf 80 bis 98, vorzugsweise 85 bis 97 Gew.-%, bezogen auf D), des vollständig gebrochenen und in Wasser aufgeschlämmten Latex von a) in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so

homogenisiert werden, daß die mittlere Teilchengröße $d_{50}$ von Komponente D) in der erfindungsgemäßen Mischung 0,05 bis 3, vorzugsweise 0,1 bis 2, insbesondere 0,2 bis 1 µm beträgt.

Der Begriff "in Abwesenheit von Suspendiermittel" bedeutet die Abwesenheit von Stoffen, die nach Art und Menge die Pfropfmonomeren b) in der wäßrigen Phase suspendieren könnten. Die Definition schließt die Anwesenheit von Stoffen nicht aus, die z.B. bei der Herstellung einer gepfropften Pfropfgrundlage a) suspendierend gewirkt haben, in derartigen Fällen muß das Koagulations- oder Fällungsmittel, das zum Brechen des Latex a) eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren b) in der wäßrigen Phase keine (stabile) Emulsion oder Dispersion ergeben.

Ein derart in Abwesenheit von Suspendiermittel hergestelltes Pfropfpolymerisat D) ist als Bestandteil der erfindungsgemäßen Formmassen in den anderen Harzkomponenten zu einer außergewöhnlich niedrigen Teilchengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetzenden Pfropfpolymerisatteilchen mit Anzahl, Form und Größe der in die geschmolzenen anderen Harzkomponenten eingebrachten Pfropfpolymerisatteilchen auch nach dem Homogenisieren im wesentlichen noch übereinstimmen.

Als Pfropfgrundlage a) können auch solche Acrylatkautschuke verwendet werden, die als wäßrige Emulsion (Latex) anfallen und deren Latexpartikel 1 bis 20 Gew.-%, vorzugsweise 1 bis 10 Gew.-%, bezogen auf a), bereits in wäßriger Emulsion aufgepfropfte Monomere enthalten, deren Homo- bzw. Copolymerisate Glastemperaturen $>0^\circ$ C aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen a) werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlagen a) für Acrylatkautschuke dieser besonderen Ausführungsform eignen sich also vorzugsweise neben den zuvor aufgezählten Polymerisaten auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten, polymerisierbaren Monomeren.

Neben den zuvor genannten Elastomeren D) können auch elastische Polyurethane (z.B. Texin®), elastische Polyester-Polyether-Blockcopolymere (z.B. Hytrel®) sowie elastische Polycarbonat-Polyether-Blockcopolymere eingesetzt werden. Diese Elastomeren sind bekannt und beispielsweise beschrieben in H.G. Elias, Makromoleküle, Hüthig u. Wepf Verlag Basel, 4. Auflage 1981, S. 787, und A. Noshay u. J.E. McGrath, Block Copolymers, Academic Press New York, 1977, S. 341.

Außerdem eignen sich als einzusetzende Elastomere Siliconpfropfkautschuke wie sie beispielsweise in DE-3 629 763 beschrieben sind.

Die Herstellung dar erfindungsgemäßen Formmassen auf Basis der Komponenten A), B), C) und gegebenenfalls D) kann in den üblichen Mischaggregaten, wie Walzen, Knetern, Ein- und Mehrwellenextrudern, erfolgen. Wenn auch in den meisten Fällen die Komponenten A), B), C) und gegebenenfalls D) zweckmäßigerweise in einem einzigen Schritt gemischt werden, kann es manchmal auch empfehlenswert sein, zuerst eine Komponente wegzulassen und diese erst zu einem späteren Zeitpunkt zuzumischen.

Die erfindungsgemäßen Formmassen auf Basis der Komponenten A), B), C) und gegebenenfalls D) können die üblichen Additive, wie Gleit- und Entformungsmittel, Nukleierungsmittel, Stabilisatoran, Füll- und Verstärkungsstoffe, Flammschutzmittel sowie Farbstoffe enthalten.

Diese Additive können in den üblichen Mengen entweder vor der Herstellung der erfindungsgemäßen Mischungen der Komponenten A) und/oder B) zugemischt werden oder nachträglich in die erfindungsgemäßen Mischungen eingearbeitet werden. Die Menge der Additive wird dabei so bemessen, daß die Additive die gewünschte Wirkung in der Mischung entfalten können. Sie ist leicht durch Vorversuche zu ermitteln.

Die erfindungsgemäßen Formmassen lassen sich zur Herstellung von Formkörpern, Halbzeugen, Fasern und Folien verwenden. Die daraus hergestellten Formkörper finden z.B. Verwendung im Automobilbereich.

Beispiele

Herstellung der Komponenten C1) und C2)

Beispiel I

a) Zur Herstellung eines Bariumsulfats mit chemoreaktiver Oberfläche (entsprechend Komponente C1)) wurden in einer Fällzelle unter Rühren eine Bariumchlorid-lösung mit einer Natriumsulfat-Lösung zur Reaktion gebracht. Vor der Umsetzung wurde die $Na_2SO_4$-Lösung (Dichte 1,088 g/ml) mit 7 g Natriumhydroxid pro Liter $Na_2SO_4$-Lösung alkalisch eingestellt und sodann mit 32 g $Na_2SiO_3$-Lösung (Dichte 1,346 g/ml) pro Liter Sulfatlösung versetzt. In der Vorrichtung wurden 105,7 ml/min $BaCl_2$-Lösung (Dichte 1,073 g/ml) und 896 ml/min der silikathaltigen $Na_2SO_4$-Lösung durchgesetzt. Der Niederschlag wurde abfiltriert, mehrmals mit Wasser gewaschen und bei 110 °C getrocknet. Die naßchemische Analyse des Trockenproduktes ergab einen $SiO_2$-Gehalt von 0,62 %. Die BET-Oberfläche des Produktes betrug 18,3 $m^2/g$.

b) Zwecks Oberflächenmodifizierung eines nach a) hergestellten silikathaltigen Bariumsulfats mit einer Vinylgruppierung wurde dieses in wasserfreiem Isopropanol dispergiert (Feststoffgehalt 10 Gew.-%). Unter Rühren wurde eine 1 %ige Lösung von Vinyltrimethoxysilan in wasserfreiem Isopropanol in einer Menge zugetropft, daß in der Anschlämmung 0,5 Gew.-% des Silans, bezogen auf das Pigment, vorlagen. Die Dispersion wurde ca. 1 Stunde bei ca. 40 °C gerührt und dann abfiltriert. Das unverbrauchte physisorptiv gebundene Silan wurde anschließend mit wasserfreiem Isopropanol aus dem Feststoff ausgewaschen und letzterer getrocknet. Es fiel ein $BaSO_4$ an, auf dem IR-spektroskopisch die Vinylgruppierung nachgewiesen werden konnte.

Beispiel II

Zwecks Fällung eines ultrafeinen Bariumsulfats (entsprechend Komponente C2)) aus wäßrigen Lösungen von Bariumchlorid und Natriumsulfat mittels einer Verdüsungsvorrichtung wurde in einem geschlossenen, vertikalen zylindrischen Reaktor (Durchmesser 300 mm) durch eine Ringdüse Natriumsulfatlösung der Dichte 1,033 g/ml in solcher Weise eingepumpt, daß ein fließender dünner Fallfilm auf der Innenwand des Reaktors entstand. Die Zuführung der Bariumchloridlösung (Dichte 1,162 g/ml) erfolgte unterhalb der Ringdüse über ein konzentrisch angeordnetes Zentrifugalzerstäuberrad mit Radialkanälen bei 40 000 Upm. In diesem Rieselfilm wurde jeweils durch die Tröpfchen ein Fällvolumen von kleiner als 0,001 $cm^3$ erzielt. Die gebildete Bariumsulfatsuspension wurde am unteren Rohrende aufgefangen, von der Mutterlauge befreit, gewaschen und bei 110 °C getrocknet. Bei einem Molverhältnis Natriumsulfat:Bariumchlorid von 1:0,7 und den Durchsätzen 0,83 Mol/min Bariumchlorid bzw. 1,19 Mol/min Natriumsulfat wurde ein ultrafeines Bariumsulfat einer Korngröße von 0,07 $\mu m$ gewonnen. Die Bestimmung der spe zifischen Oberfläche nach BET am Pulverprodukt ergab einen Wert von 33 $m^2/g$.

Beispiel III

Die Fällung eines ultrafeinen Bariumsulfates (entsprechend Komponente C1) und 2)) aus einer wäßrigen Lösung von Natriumsulfat und einer wäßrigen Natriumlaurylsulfat enthaltenden Natriumsulfatlösung wurde in einer Zerstäubervorrichtung vorgenommen. Hierzu wurden zwei Zerstäuberdüsen in einem geschlossenen, zylindrischen, vertikalen Reaktor so angeordnet, daß sich ihre Austrittsöffnungen in einem Abstand von 500 mm gegenüberlagen und die Sprühkegel in der vertikalen Kontaktfläche einen deckungsgleichen Kreis bildeten. Durch die eine Düse wurde eine wäßrige Bariumchloridlösung (Dichte von 1,050 g/ml) bei einem Luftdruck von 6 bar zerstäubt, während gleichzeitig durch die andere Düse eine Natriumsulfatlösung, enthaltend 2,5 g Natriumlaurylsulfat pro Liter $Na_2SO_4$-Lösung (Dichte von 1,104 g/ml) und einem Druck von 3,2 bar zerstäubt wurde.

Es wurde 44,2 l/h der Natriumlaurylsulfat enthaltenden Natriumsulfatlösung und 81,8 l/h Bariumchloridlösung durchgesetzt. Die gebildete Bariumsulfatsuspension wurde aufgefangen, von der Mutterlauge befreit, mehrmals mit Wasser gewaschen bis zu einer Leitfähigkeit der Suspension von 100 $\mu S/cm$ und sodann bei 110 °C getrocknet. Die Kohlenstoffbestimmung des trockenen Produktes ergab einen Kohlenstoffgehalt von 0,32 %. Die Bestimmung der spezifischen Oberfläche des Pulverproduktes nach BET er gab einen Wert von 36 $m^2/g$. Dies entspricht einer Primärkorngröße von 0,038 $\mu m$.

Beispiel IV

Zwecks Herstellung eines ultrafeinen, salzarmen Bariumsulfats (entsprechend Komponente C2)) wurde die Fällung in einer Zerstäubervorrichtung durch Umsetzung einer Bariumhydroxidlösung mit Schwefelsäure vorgenommen.

Einer Dreistoff-Zerstäuberdüse, die zentral im Deckel eines geschlossenen, vertikalen, zylindrischen Reaktors befestigt war, wurde Bariumhydroxidlösung (Dichte 1,060 g/ml bei 75 °C) und Schwefelsäure (Dichte 1,060 g/ml bei 25 °C) bei einem Druck von 3,3 bar zerstäubt. Die beiden Reaktanden trafen an der Düsenmündung in einem kreisförmigen Vollkegel aufeinander. Es wurde 12,6 l/h $Ba(OH)_2$-Lösung und 12,3 l Schwefelsäure durchgesetzt. Die entstandene $BaSO_4$-Suspension wurde aufgefangen, der pH-Wert auf 6,5 bis 7,0 eingestellt, das Fällprodukt abgetrennt und bei 110 bis 120 °C getrocknet.

Die spezifische Oberfläche des Trockenproduktes nach BET ergab einen Wert von 51,5 $m^2/g$. Dies entspricht einer Primärkorngröße von 0,026 µm.

Eingesetzte Substanzen (Komponenten)

A) siehe Tabelle

B) Die eingesetzten Polyethylenterephthalate hatten folgende Intrinsic-Viskositäten, gemessen in o-Dichlorbenzol/Phenol (1:1) bei 25 °C:

I: 0,725 dl/g

II: 0,637 dl/g

III: 0,905 dl/g

Das Polyethylenterephthalat II enthält im Gegensatz zu I und III 3 Gew.-% Bariumsulfat (Typ C1))

D) siehe Tabelle

Von den Formmassen wurden auf einer üblichen Spritzgußmaschine 80 x 10 x 4 mm Prüfstäbe hergestellt. Geprüft wurden Wärmeformbeständigkeit (Vicat B) (DIN 53 460) sowie die Karbschlagzähigkeit nach Izod (ISO 180) bei verschiedenen Temperaturen und daraus wurde der Zäh/Spröd-Übergang ermittelt.

Tabelle 1

| Beispiel | 1 (Vergleich) | 2 | 3 (Vergleich) | 4 | 5 (Vergleich) | 6 |
|---|---|---|---|---|---|---|
| Komponenten (Gew.-%) | | | | | | |
| PET-Typ | I | II | I | II | III | II |
| PET | 22 | 22 | 24 | 24 | 22 | 22 |
| PC | 70[1)] | 70[1)] | 76[1)] | 76[1)] | 56[2)] | 56[2)] |
| Pfropfpolymerisat | 8[3)] | 8[3)] | - | - | 22[4)] | 22[4)] |
| $a_k$ (kJ/$m^2$, RT) | 67* | 74,6* | 10,5 | 14,3 | 64* | 65* |
| $T_k$[5)] (°C) | -20 | -20/30 | - | - | <-40 | <-40 |
| Vicat B (°C) | 138 | 142 | 142,5 | 147,5 | 120 | 129 |

*: Zähbruch

1): Homopolycarbonat aus 2,2-Bis-(4-hydroxyphenyl)-propan ($\eta_{rel}$ = 1,29, gemessen in Dichlormethan bei 25 °C und einer Konzentration von 0,5 g/ml)

2): Homopolycarbonat aus 2,2-Bis-(4-hydroxyphenyl)-propan ($\eta_{rel}$ = 1,26, gemessen in Dichlormethan bei 25 °C und einer Konzentration von 0,5 g/ml)

3): Acrylat-Pfropfpolymerisat, erhalten durch Emulsions-Propfpolymerisation von 20 Gew.-Teilen Methylmethacrylat/n-Butylacrylat-Gemisch (Gew.-Verh. 18:2) auf 80 Gew.-Teile teilchenförmigen Polybutadien Kautschuk-Latex ($d_{50}$ = 0,4 µm)

4): SAN-Pfropfpolymerisat, erhalten durch Emulsions-Pfropfpolymerisation von 50 Gew.-Teilen Styrol-Acrylnitril-Gemisch (Gew.-Verh. 72:28) auf 50 Gew.-Teile teilchenförmigen Polybutadien-Kautschuk-Latex ($d_{50}$ = 0,1 µm)

5): Temperatur, bei der Zähbruch in Sprödbruch übergeht.

## Ansprüche

1. Thermoplastische Formmassan aus

A) 1 bis 99 Gew.-Teilen Polycarbonat,

B) 1 bis 99 Gew.-Teilen Polyalkylenterephthalat,

C1) 0,1 bis 50 Gew.-Teilen Bariumsulfat mit chemoreaktiver Oberfläche, hergestellt durch Fällung von Bariumionen mittels Sulfationen in wäßrigem Medium in Gegenwart von zusätzlichen, mit Bariumionen fällbare und schwer lösliche Bariumverbindungen bildenden Anionen wasserlöslicher Verbindungen, wobei das erhaltene, gegebenenfalls mit Kupplungsmitteln nachbehandelte chemoreaktive Bariumsulfat Korngrößen von <0,1 µm [80 bis 5 $m^2/g$ (nach BET)] aufweist,

und/oder

C2) 0,1 bis 50 Gew.-Teilen ultrafeinem Bariumsulfat, hergestellt durch Zusammenbringen getrennter wäßriger Lösungen, die jeweils äquivalente Mengen Bariumionen und Sulfationen enthalten, und Abtrennen des Präzipitats, wobei man zur Herstellung von gefälltem Bariumsulfat mit einer Primärkorngröße von <0,1 µm in einem geschlossenen Reaktor die wäßrigen Lösungen der Reaktanden kontinuierlich in Teilvolumina hoher Anzahl zerlegt, diese zu diskreten Fällvolumina einer mittleren Volumengröße von <1 µl vereinigt und die gebildete Suspension des Präzipitats kontinuierlich aus dem Reaktor abführt,

und gegebenenfalls

D) 0,1 bis 30 Gew.-Teilen eines Elastomeren mit der Maßgabe, daß sich die Komponenten A) bis C) bzw. D) zu 100 Gew.-Teilen addieren.

2. Thermoplastische Formmassen nach Anspruch 1, dadurch gekennzeichnet, daß sie die Komponente A) zu 20 - 80 Gew.-Teilen, die Komponente B) zu 80 - 10 Gew.-Teilen, die Komponente C1) und/oder C2) zu 0,1 - 40 Gew.-Teilen und gegebenenfalls die Komponente D) zu 1 - 30 Gew.-Teilen enthalten.

3. Thermoplastische Formmassen nach Anspruch 1, dadurch gekennzeichnet, daß sie die Komponente A) zu 40 - 70 Gew.-Teilen, die Komponente B) zu 20 - 60 Gew.-Teilen, die Komponente C1) und/oder C2) zu 0,1 - 5 Gew.-Teilen und gegebenenfalls die Komponente D) zu 5 - 25 Gew.-Teilen enthalten.

4. Verwendung der Formmassen nach Ansprüchen 1 bis 3 zur Herstellung von Formkörpern aller Art.

Europäisches Patentamt

# EUROPÄISCHER RECHERCHENBERICHT

Nummer der Anmeldung

EP 90116316.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| Y | EP - A1 - 0 122 601 (IDEMITSU PETROCHEMICAL COMPANY LIMITED) * Ansprüche; Seite 7, Zeilen 9-26; Seite 8, Zeilen 27-31 * -- | 1-4 | C 08 L 69/00<br>C 08 L 67/02<br>C 08 K 3/30 |
| Y | DATABASE WPIL, No. 88-165 809, DERWENT PUBLICATIONS LTD., London & JP-A-63-105 059 (TOYOBO K.K.; NIPPON MAGFAN K.K.) (10-05-1988) * Abstract * -- | 1,4 | |
| P,A | EP - A1 - 0 335 159 (BAYER AG METALLGESELLSCHAFT AKTIENGESELLSCHAFT) * Ansprüche * -- | 1-4 | |
| P,A | EP - A2 - 0 362 623 (BAYER AG) * Ansprüche * ---- | 1-4 | RECHERCHIERTE SACHGEBIETE (Int Cl.5)<br>C 08 L 67/00<br>C 08 L 69/00<br>C 08 K |

Der vorliegende Recherchenbericht wurde für alle Patentansprüche erstellt.

| Recherchenort | Abschlußdatum der Recherche | Prüfer |
|---|---|---|
| WIEN | 02-11-1990 | WEIGERSTORFER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument